# EUROPEAN PATENT APPLICATION

(11) **EP 4 749 664 A1**
(43) Date of publication of application: **27.05.2026**
(21) Application number: 24845416.7
(22) Date of filing: 11.07.2024
(51) Int. Cl.: H01B 13/00, H01B 1/06, H01B 1/10, H01M 10/0562

(54) **METHOD FOR PRODUCING SULFIDE SOLID ELECTROLYTE**

(30) Priority: 21.07.2023 JP 2023119360
(71) Applicant: AGC INC., Chiyoda-ku, Tokyo 1008405 (JP)
(72) Inventor: OMORI Norifumi, Tokyo 100-8405 (JP)
(74) Representative: Müller-Boré & Partner Patentanwälte PartG mbB
(86) International application number: PCT/JP2024/025060
(87) International publication number: WO 2025/023035

(57) **Abstract**

The present invention relates to a method for continuously producing a sulfide solid electrolyte, the method comprising: heating and melting a first powder starting material that includes P₂S₅ so as to form a melt; and additionally feeding a second powder starting material that includes P₂S₅ into the melt and melting the second powder starting material therein. In this method for producing a sulfide solid electrolyte, an inert gas is caused to flow into the melt when the second powder starting material that includes P₂S₅ is additionally fed thereinto.

## Description

### TECHNICAL FIELD

The present invention relates to a method for producing a sulfide solid electrolyte.

### BACKGROUND ART

Lithium ion secondary batteries are widely used in portable electronic devices such as a mobile phone and a notebook computer. In the related art, a liquid electrolyte has been used in a lithium ion secondary battery. On the other hand, in recent years, an all-solid-state lithium ion secondary battery in which a solid electrolyte is used as an electrolyte of the lithium ion secondary battery has attracted attention from the viewpoint that improvement of safety, highspeed charging and discharging, and a reduction in size of a case can be expected.

Examples of the solid electrolyte used in the all-solid-state lithium ion secondary battery include a sulfide solid electrolyte.

Examples of a method for producing the sulfide solid electrolyte include a melting method and a solid phase method.

In the case of producing the sulfide solid electrolyte by a melting method, it is necessary to heat a mixture of raw materials at a temperature of, for example, 600°C or higher. However, since phosphorus pentasulfide (P₂S₅), which is often used as a raw material, has a boiling point of as low as 514°C, it easily volatilizes when heated at a high temperature, and it is difficult to control a composition of the obtained sulfide solid electrolyte.

In contrast, for example, Patent Literature 1 discloses a method of preventing only a P₂S₅ component from volatilizing during melting by melting and vitrifying a composite compound containing lithium, phosphorus, and sulfur, and then rapidly cooling the molten glass.

Patent Literature 2 discloses a method of preventing volatilization of raw materials and preventing a composition deviation by heating a solid raw material while compressing the raw material to form a molten body.

Patent Literature 3 discloses a method of realizing a target chemical composition without reducing the amount of sulfur in constituent compounds by mixing the constituent compounds at a predetermined stoichiometric ratio and then heating and melting the mixture in an excessive sulfur state.

### CITATION LIST

### PATENT LITERATURE

Patent Literature 1: JP2012-043654A
Patent Literature 2: JP5640665B
Patent Literature 3: JP3284215B

### SUMMARY OF INVENTION

### TECHNICAL PROBLEM

However, in the method disclosed in Patent Literature 1, since it is necessary to synthesize the composite compound in advance, production steps are complicated. Further, volatilization of the composite compound itself during melting cannot be prevented.

In the method disclosed in Patent Literature 2, since it is necessary to compress the raw material, the facility structure is very complicated, and thus it is difficult to produce a large number of solid electrolytes.

In the method disclosed in Patent Literature 3, the volatilization of sulfur can be prevented, but the volatilization of phosphorus such as P₂S₅ cannot be prevented, and it is still difficult to control the composition of the sulfide solid electrolyte.

Here, when continuously producing the sulfide solid electrolyte by using the melting method, it is necessary to additionally supply a powder raw material to the melt obtained by heating and melting. However, P₂S₅ in the powder raw material has a low boiling point as described above and a low melting point. In this manner, since P₂S₅ is liquefied at a relatively low temperature, when an attempt is made to additionally supply the powder raw material containing P₂S₅, the powder raw material adhering to a wall surface or the like in the apparatus is liquefied and further solidified to easily form an aggregate. In particular, when the powder raw material adheres to the vicinity of a supply port of the powder raw material, the vicinity of the supply port is clogged by the aggregate formed through liquefaction, and it is difficult to continuously charge the powder raw material. Similarly, when the powder raw material is liquefied in a supply route for supplying the powder raw material to form an aggregate, the supply route is also clogged, and it is difficult to continuously charge the powder raw material.

Therefore, it is conceivable to lower a heating and melting temperature, but the heating is difficult when the temperature is lowered. Further, a volatile gas generated from the melt is more easily liquefied and solidified, and the vicinity of the supply port in the apparatus is more easily clogged.

In view of the above, an object of the present invention is to provide a method for stably producing a sulfide solid electrolyte by preventing aggregation of volatile components contained in a melt in the vicinity of a supply port or in a supply route of an apparatus when continuously producing the sulfide solid electrolyte using a melting method.

### SOLUTION TO PROBLEM

As a result of intensive studies, the present inventors have found that the above problems can be solved by flowing an inert gas together when additionally charging a P₂S₅-containing powder raw material, and have completed the present invention.

That is, the present invention relates to the following [1] to [6].
[1] A method for producing a sulfide solid electrolyte, which is a method for continuously producing a sulfide solid electrolyte, the method including:
   heating and melting a first P₂S₅-containing powder raw material to form a melt; and
   additionally charging a second P₂S₅-containing powder raw material to the melt and performing melting,
   in which an inert gas is flowed into the melt when additionally charging the second P₂S₅-containing powder raw material thereto.
[2] The method for producing a sulfide solid electrolyte according to [1], in which a gas flow velocity when the inert gas is flowed is 0.05 m/sec or more.
[3] The method for producing a sulfide solid electrolyte according to [1] or [2], in which a temperature in the heating and melting is 600°C or higher.
[4] The method for producing a sulfide solid electrolyte according to any one of [1] to [3],
   in which the additional charging is performed through a first flow path through which the second P₂S₅-containing powder raw material is charged and a second flow path through which the inert gas flows in, and
   the second flow path is disposed around the first flow path.
[5] The method for producing a sulfide solid electrolyte according to [4], in which a flow rate of the inert gas passing through the second flow path is larger than a flow rate of the inert gas passing through the first flow path.
[6] The method for producing a sulfide solid electrolyte according to any one of [1] to [5], in which the inert gas has a dew point of lower than -50°C.

### ADVANTAGEOUS EFFECTS OF INVENTION

According to the present invention, when continuously producing the sulfide solid electrolyte using a melting method, it is possible to stably produce a sulfide solid electrolyte since aggregation of volatile components contained in a melt in the vicinity of a supply port of an apparatus or in a supply route can be prevented.

### BRIEF DESCRIPTION OF DRAWINGS

FIG. 1 is a flow diagram showing a method for producing a sulfide solid electrolyte according to the present embodiment.
FIG. 2 is a schematic view showing an aspect of an apparatus for use in the production method according to the present embodiment.
FIG. 3 is a schematic view showing an aspect of the apparatus for use in the production method according to the present embodiment.

### DESCRIPTION OF EMBODIMENTS

Hereinafter, the present invention is described in detail, but the present invention is not limited to the following embodiment, and can be freely modified and implemented without departing from the gist of the present invention.

"To" indicating a numerical range is used to include numerical values written before and after it as a lower limit value and an upper limit value.

In the following drawings, members and portions having the same functions may be denoted by the same reference numerals, and duplicate descriptions may be omitted or simplified.

Embodiments described in the drawings are schematically for the purpose of clearly illustrating the present invention, and do not necessarily accurately represent a size or a scale of an actual apparatus.

### <<Method for Producing Sulfide Solid Electrolyte>>

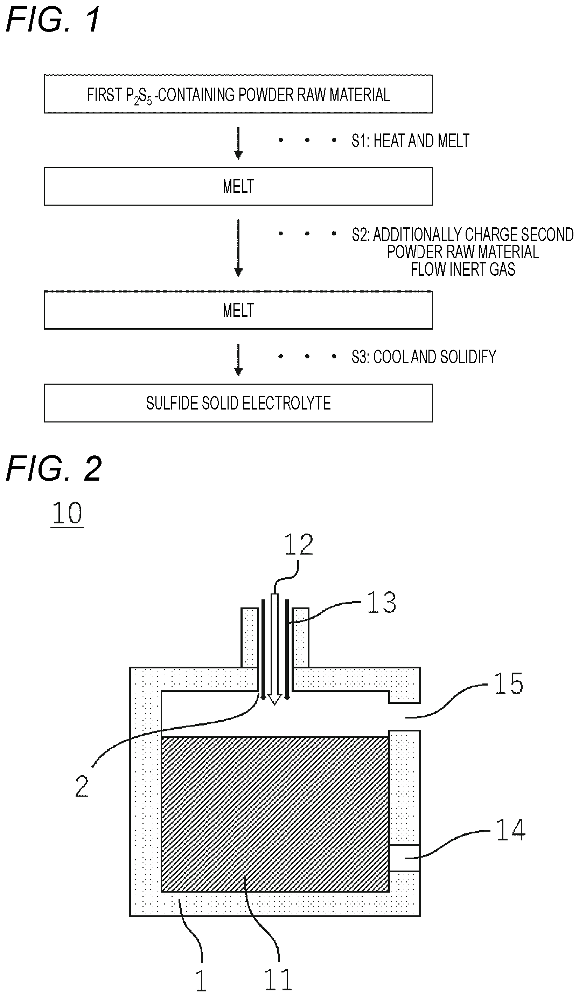

A production method according to the present embodiment is a method for continuously producing a sulfide solid electrolyte, and includes the following steps as shown in FIG. 1.
(Step S1) a step of heating and melting a first P₂S₅-containing powder raw material to form a melt
(Step S2) a step of additionally charging a second P₂S₅-containing powder raw material to the melt and performing melting

When additionally charging the second P₂S₅-containing powder raw material in the step 2, an inert gas is flowed into the melt.

The production method according to the present embodiment preferably further includes the following step subsequent to the step S2.
(Step S3) cooling and solidifying the melt

Hereinafter, each step is described.

### <Step S1: Step of Heating and Melting First P₂S₅-containing Powder Raw Material to Form Melt>

### · First P₂S₅-containing Powder Raw Material

Regarding the first P₂S₅-containing powder raw material, a mixture obtained by mixing raw materials may be charged into an apparatus, or the raw materials may be charged into the apparatus without being mixed. Among these, from the viewpoint of enhancing homogeneity of the obtained sulfide solid electrolyte, it is preferable to charge the mixture obtained by mixing the respective raw materials into the apparatus.

Various raw materials can be used for each raw material constituting the first P₂S₅-containing powder raw material in the present embodiment, and the sulfide solid electrolyte obtained using these raw materials may also be various sulfide solid electrolytes.

Each raw material may be synthesized, a commercially available product may be used, and a known pretreatment may be performed. That is, the production method according to the present embodiment may include a step of preparing each raw material as a step S0 before the step S1. Specifically, the step 0 may appropriately include at least one of a step of producing each raw material and a step of subjecting at least a part of the raw materials to a pretreatment.

Each raw material constituting the first P₂S₅-containing powder raw material may be appropriately determined depending on the composition of the desired sulfide solid electrolyte. One of the raw materials is P₂S₅.

The raw materials contain, for example, an alkali metal element (R) and a sulfur element (S), and the above P₂S₅ can be a sulfur element source as well as a phosphorus element (P) source.

Examples of the alkali metal element (R) include a lithium element (Li), a sodium element (Na), and a potassium element (K). In the case where the sulfide solid electrolyte is applied to a lithium ion secondary battery, the alkali metal element (R) is preferably a lithium element (Li).

As an alkali metal element (R) source, substances (components) containing an alkali metal element such as an elemental alkali metal element and compounds containing an alkali metal element can be appropriately combined and used.

In the case where the alkali metal element (R) is a lithium element (Li), a Li-containing substance (component) such as elemental Li or a Li-containing compound can be appropriately used in combination as a lithium element source.

Examples of the lithium element (Li)-containing substance include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metal lithium. The lithium element (Li)-containing substance may be used alone or in combination of two or more kinds thereof.

As the lithium element (Li)-containing substance, it is preferable to use lithium sulfide from the viewpoint of obtaining a sulfide material. In the case where the obtained sulfide solid electrolyte contains a halogen element, a lithium halide (LiHa, Ha is a halogen element) is also preferred as the lithium element (Li)-containing substance. The lithium halide is to be described later.

As a sulfur element (S) source, S-containing substances (components) such as elemental S and a S-containing compound can be appropriately combined and used. The sulfur element (S)-containing substance may be used alone or in combination of two or more kinds thereof.

Here, since the production method according to the present embodiment has an object of preventing aggregation in the apparatus due to liquefaction of P₂S₅ at a low temperature, the powder raw material in the present embodiment contains at least P₂S₅, which can be the sulfur element (S) source. The phosphorus sulfide including P₂S₅ is a compound serving as both the sulfur element (S)-containing substance and a phosphorus element (P)-containing substance to be described later.

Examples of the sulfur element (S)-containing substance include phosphorus sulfides such as phosphorus trisulfide (P₂S₃) in addition to phosphorus pentasulfide (P₂S₅), other sulfur compounds containing phosphorus, elemental sulfur, and a sulfur-containing compound.

Examples of the sulfur-containing compound include H₂S, CS₂, iron sulfides (such as FeS, Fe₂S₃, FeS₂, and Fe₁₋ₓS), bismuth sulfide (Bi₂S₃), and copper sulfides (such as CuS, Cu₂S, and Cu₁₋ₓS).

From the viewpoint of improving an ion conductivity and the like of the obtained sulfide solid electrolyte, it is preferable that the raw materials further contain a phosphorus element (P). As a phosphorus element (P) source, P-containing substances (components) such as elemental P and a P-containing compound can be appropriately combined and used. The phosphorus element (P)-containing substance may be used alone or in combination of two or more kinds thereof.

Here, as described above, the powder raw material in the present embodiment contains at least P₂S₅, which can be the phosphorus element (P) source.

Examples of the phosphorus element (P)-containing substance include phosphorus sulfides such as phosphorus trisulfide (P₂S₃) in addition to phosphorus pentasulfide (P₂S₅), phosphorus compounds such as sodium phosphate (Na₃PO₄), and elemental phosphorus.

As the phosphorus element (P)-containing substance, a phosphorus sulfide having high volatility is preferred from the viewpoint of further exhibiting the effect of the present invention. From this viewpoint, phosphorus pentasulfide (P₂S₅) is preferred.

In the case where a mixture obtained by mixing the raw materials is charged as the first P₂S₅-containing powder raw material in the present embodiment into the apparatus, for example, a mixing ratio of the above substances is appropriately determined according to the composition of the target sulfide solid electrolyte. In the case where the raw materials are charged into the apparatus without being mixed as the first P₂S₅-containing powder raw material in the present embodiment, for example, a charging ratio of the above substances is appropriately determined according to the composition of the target sulfide solid electrolyte.

The mixing ratio or the charging ratio of the raw materials is not particularly limited. For example, a molar ratio S/R of the sulfur element (S) to the alkali metal element (R) in the entire first P₂S₅-containing powder raw material is preferably 0.65/0.35 or less, and more preferably 0.5/0.5 or less, from the viewpoint of improving the ion conductivity and the like of the obtained sulfide solid electrolyte.

In the case where a mixture obtained by mixing the raw materials is charged as the first P₂S₅-containing powder raw material into the apparatus, it is preferable to mix the raw materials at a predetermined stoichiometric ratio according to the substance to obtain the mixture.

A mixing method for obtaining the mixture is not particularly limited, and examples thereof include mixing in a mortar, mixing using a medium such as a planetary ball mill, and medium-less mixing such as a pin mill, a powder stirrer, and air flow mixing.

An example of a preferred combination of the alkali metal element-containing substance and the sulfur element-containing substance when mixing or charging the raw materials includes a combination of Li₂S and P₂S₅. In the case where the obtained sulfide solid electrolyte contains a halogen element as a constituent element, examples thereof include a combination of Li₂S, P₂S₅, and LiHa.

In the case of combining Li₂S and P₂S₅, a molar ratio Li/P of Li to P is preferably 40/60 to 88/12, and more preferably 50/50 to 88/12. When the mixing ratio or the charging ratio is adjusted such that the amount of P₂S₅ is relatively smaller than the amount of Li₂S, it is easier to prevent volatilization of the sulfur component and the phosphorus component during a heat treatment due to a lower boiling point of P₂S₅ compared to a melting point of Li₂S.

On the other hand, since lithium sulfide is expensive, a lithium compound other than lithium sulfide, metal lithium, or the like may be used from the viewpoint of reducing a production cost of the sulfide solid electrolyte.

In this case, the raw material may be a Li-containing substance, such as metal lithium, a lithium halide (LiHa), lithium carbonate (Li₂CO₃), lithium sulfate (Li₂SO₄), lithium oxide (Li₂O), or lithium hydroxide (LiOH). These may be used alone or in combination of two or more kinds thereof.

The raw materials in the present embodiment may further contain substances (compounds and the like) in addition to the above substances depending on the composition of the target sulfide solid electrolyte or as additives or the like.

For example, in the case of producing a sulfide solid electrolyte containing a halogen element such as F, Cl, Br or I, the raw materials preferably contain a halogen element (Ha). In this case, a halogen element-containing compound is preferably contained as the raw materials.

Examples of the halogen element-containing compound include lithium halides such as lithium fluoride (LiF), lithium chloride (LiCl), lithium bromide (LiBr), and lithium iodide (LiI), a phosphorus halide, a phosphoryl halide, a sulfur halide, a sodium halide, and a boron halide. Among these, from the viewpoint of reactivity, a lithium halide is preferred, LiCl, LiBr, and LiI are more preferred, and LiCl and LiBr are still more preferred. These compounds may be used alone or in combination of two or more kinds thereof.

An alkali metal halide such as a lithium halide is also a compound containing an alkali metal element such as Li, and thus can be the alkali metal element (R) source in the raw materials.

In the case where the first P₂S₅-containing powder raw material in the present embodiment contains the halogen element (Ha) and the phosphorus element (P), a molar equivalent of the halogen element (Ha) to the phosphorus element (P) in the first P₂S₅-containing powder raw material is preferably 0.2 to 4 molar equivalents, and more preferably 0.5 to 3 molar equivalents. Here, the molar equivalent of the halogen element is preferably 0.2 molar equivalents or more, and more preferably 0.5 molar equivalents or more, from the viewpoint of improving the ion conductivity and the like of the obtained sulfide solid electrolyte. The molar equivalent of the halogen element is preferably 4 molar equivalents or less, and more preferably 3 molar equivalents or less, from the viewpoint of stability of the obtained sulfide solid electrolyte. In the case where the first P₂S₅-containing powder raw material contains two or more kinds of halogen elements, a total content thereof preferably satisfies the above molar equivalent range.

The sulfide solid electrolyte obtained by the production method according to the present embodiment may be amorphous depending on the purpose. In the case where the sulfide solid electrolyte has an amorphous phase, it is preferable to contain a sulfide such as SiS₂, B₂S₃, GeS₂, or Al₂S₃ as the raw materials from the viewpoint of easily forming an amorphous phase and reducing a facility load even when a rapid cooling rate during rapid cooling is reduced. These may be used alone or in combination of two or more kinds thereof.

From the viewpoint of imparting moisture resistance to the obtained sulfide solid electrolyte, it is preferable to contain an oxide such as SiO₂, B₂O₃, GeO₂, Al₂O₃, or P₂O₅ as the raw materials. These may be used alone or in combination of two or more kinds thereof.

In the case of charging, as the first P₂S₅-containing powder raw material in the present embodiment, a mixture obtained by mixing the raw materials into the apparatus, the sulfide and the oxide may be contained in the mixture together, or may be separately added during heating.

An addition amount of the oxide with respect to the sulfide is preferably 0.1 mass% to 50 mass%, and more preferably 0.5 mass% to 40 mass%. Here, the addition amount is preferably 0.1 mass% or more, more preferably 0.5 mass% or more, and is preferably 50 mass% or less, more preferably 40 mass% or less.

The raw materials constituting the first P₂S₅-containing powder raw material in the present embodiment may further contain a compound to be a crystal nucleus to be described later.

The production method according to the present embodiment has an object of preventing aggregation in the apparatus due to liquefaction of P₂S₅ at a low temperature, but also has an effect of preventing aggregation due to a compound having high volatility other than P₂S₅. Examples of the compound having high volatility other than P₂S₅ include LiI, B₂S₃, S, Se, Sb₂S₃, and P₂S₅. Therefore, even when the sulfide solid electrolyte is continuously produced using a powder raw material containing the compound having high volatility together with P₂S₅ or instead of P₂S₅, the production method including the step S1 and the step S2 is effective.

### · Heating and Melting

In the step S1 in the present embodiment, the first P₂S₅-containing powder raw material is charged into the apparatus and then heated to melt the powder raw material, thereby obtaining a melt.

For heating and melting, a well known furnace including a heating unit can be appropriately used as a furnace as the apparatus, and a material and a size of the furnace can be freely selected.

An initial charging amount of the first P₂S₅-containing powder raw material should be an amount that allows an amount of the melt obtained by heating and melting to form at least a melt surface in the furnace. Here, the melt surface means a liquid surface formed by the melt covering the entire bottom surface of the furnace.

Since the melt surface is formed in the furnace, when the second P₂S₅-containing powder raw material is additionally charged in the subsequent step S2, the temperature of the charged powder raw material rapidly rises and the powder raw material is instantaneously melted. Therefore, according to the addition of the second P₂S₅-containing powder raw material, the melt is continuously and successively obtained, and the sulfide solid electrolyte is obtained in a short time through the subsequent cooling and solidification step.

By continuous production of the sulfide solid electrolyte, a large number of sulfide solid electrolytes can be produced in a short time. The volatilization of the raw materials in the production steps can be prevented with the shortening in time of the production steps.

A temperature in the heating and melting is not particularly limited as long as the first P₂S₅-containing powder raw material is melted, and is preferably 600°C to 1,000°C, more preferably 630°C to 950°C, still more preferably 650°C or higher and lower than 900°C, and even more preferably 650°C or higher and lower than 800°C. Here, the temperature in the heating and melting preferably 600°C or higher, more preferably 630°C or higher, and still more preferably 650°C or higher, from the viewpoint of homogenizing the melt in a short time. The temperature in the heating and melting is preferably 1,000°C or lower, more preferably 950°C or lower, and still more preferably lower than 900°C, from the viewpoint of preventing deterioration or decomposition of components in the melt.

The temperature in the heating and melting is the temperature of the molten powder raw material present in the furnace, and can be adjusted by the heating unit provided in the furnace.

A time for the heating and melting is not particularly limited as long as the melt surface is obtained, and may be, for example, 0.5 hours or longer, 1 hour or longer, or 2 hours or longer.

A pressure during the heating and melting is not particularly limited, and for example, a normal pressure or a slight pressure is preferred, and a normal pressure is more preferred.

From the viewpoint of preventing side reactions with water vapor, oxygen, and the like during the heating and melting, a dew point in the furnace is preferably -20°C or lower. A lower limit is not particularly limited, and is generally -80°C or higher. An oxygen concentration in the furnace is preferably 1,000 ppm by volume or less.

<Step S2: Step of Additionally Charging Second P₂S₅-containing Powder Raw Material to Melt and Performing Melting>

In the step S2, the second P₂S₅-containing powder raw material is additionally charged to the melt obtained in the step S1 and melted. In this additional charging, an inert gas is flowed into the melt.

FIG. 2 shows an aspect of an apparatus 10 for use in the production method according to the present embodiment.

In the step S2, the additional charging of the second P₂S₅-containing powder raw material 12 as indicated by a white arrow and the inflow of the inert gas 13 as indicated by a black arrow are performed through a supply port 2 to a melt 11 in a furnace 1 obtained in the step S1.

By performing both the additional charging of the second P₂S₅-containing powder raw material 12 and the inflow of the inert gas 13, it is possible to prevent liquefaction of volatile components such as P₂S₅ contained in the melt 11 near the supply port 2 and liquefaction associated with the entry into a supply route for supplying the second P₂S₅-containing powder raw material 12 and the inert gas 13. As a result, the aggregation of volatile components in the supply route and in the vicinity of the supply port 2 is prevented, and the supply route and the supply port 2 are prevented from being clogged.

In addition, since thermal convection occurs due to a temperature difference between the vicinity of the supply port and the melt, the raw material scatters to the surroundings when only the additional charging of the second P₂S₅-containing powder raw material 12 is performed. In contrast, by flowing the inert gas 13 together, the second P₂S₅-containing powder raw material 12 is charged into the melt without being influenced by the thermal convection. On the other hand, since only the inert gas 13 flows out from an exhaust port 15 thereafter, it is possible to prevent adhesion of the second P₂S₅-containing powder raw material 12 to the vicinity of the exhaust port 15 while preventing the scattering of the second P₂S₅-containing powder raw material 12 to the surroundings.

Further, when cooling water or the like is used to lower the temperature of the supply route other than a portion where the melt 11 is present in the furnace 1, the volatile components in the melt 11 are cooled due to the low temperature, and components having a low melting point such as P₂S₅ are liquefied to easily form an aggregate. In contrast, since the volatilization of the volatile components such as P₂S₅ can be prevented by the inflow of the inert gas 13, it is possible to prevent clogging due to the formation of the aggregate while lowering the temperature of the supply route.

During the inflow of the inert gas 13, a gas flow velocity of the inert gas 13 is preferably 0.01 m/sec to 1.0 m/sec, and more preferably 0.05 m/sec to 0.5 m/sec. Here, the gas flow velocity is preferably 0.01 m/sec or more, and more preferably 0.05 m/sec or more, from the viewpoint of preventing the volatilization of the volatile components such as P₂S₅ contained in the melt 11. The gas flow velocity is preferably 1.0 m/sec or less, and more preferably 0.5 m/sec or less, from the viewpoint of preventing the scattering. The gas flow velocity of the inert gas 13 in the present description means a flow velocity in the supply route until the inert gas 13 flows into the furnace 1.

The dew point of the inert gas 13 is preferably lower than -50°C, more preferably - 55°C or lower, and still more preferably -60°C or lower, from the viewpoint of preventing a side reaction with the powder raw material or the melt. The lower limit of the dew point of the inert gas 13 is not particularly limited, and is generally -20°C or more.

In the additional charging in the step S2, the introduction of the second P₂S₅-containing powder raw material into the furnace and the introduction of the inert gas into the furnace may be separately performed through two or more flow paths. In this case, the second P₂S₅-containing powder raw material and the inert gas merge at a path from the introduction into the furnace to the additional charging to the melt.

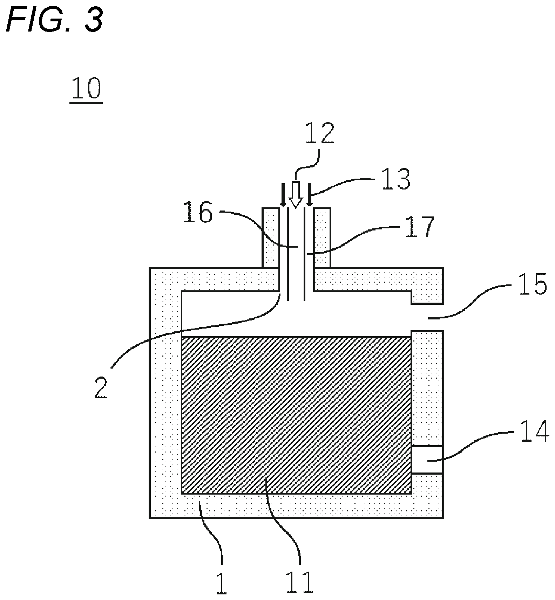

Specifically, as shown in FIG. 3, the additional charging is preferably performed through a first flow path 16 through which the second P₂S₅-containing powder raw material 12 is charged and a second flow path 17 through which the inert gas 13 flows in. More preferably, the second flow path 17 is disposed around the first flow path 16.

The second flow path 17 may be disposed around the first flow path 16 by a double pipe structure, or a plurality of second flow paths 17 may be present and the plurality of second flow paths 17 may be disposed around the first flow path 16.

Accordingly, a temporary wall such as a curtain by the inert gas 13 is formed around the second P₂S₅-containing powder raw material 12 to be additionally charged, and the adhesion of the second P₂S₅-containing powder raw material 12 to the inside of the apparatus 10 can be further prevented.

Through the first flow path 16, only the second P₂S₅-containing powder raw material 12 may be charged, or in addition to the charging of the second P₂S₅-containing powder raw material 12, the inert gas 13 may be flowed in. The flow rate of the inert gas 13 passing through the second flow path 17 is preferably larger than the flow rate of the inert gas 13 passing through the first flow path 16. In the case where there are a plurality of second flow paths 17, it is preferable that at least one of the flow rates of the inert gas 13 passing through the plurality of second flow paths 17 is larger than the flow rate of the inert gas 13 passing through the first flow path 16, and it is more preferable that all of the flow rates are larger than the flow rate of the inert gas 13 passing through the first flow path 16. The flow rate of the inert gas 13 passing through the first flow path 16 may be 0 L/sec, that is, only the second P₂S₅-containing powder raw material 12 may be charged through the first flow path 16.

A difference between the flow rate of the inert gas 13 passing through the second flow path 17 and the flow rate of the inert gas 13 passing through the first flow path 16 is, for example, preferably 0.5 L/sec or more, and more preferably 1 L/sec or more.

The second P₂S₅-containing powder raw material 12 to be additionally charged to the melt 11 may have a composition same as or different from the composition of the first P₂S₅-containing powder raw material in the step S1, and from the viewpoint of obtaining a homogeneous sulfide solid electrolyte, a powder raw material having the same composition is preferred. On the other hand, in the heating and melting of the first P₂S₅-containing powder raw material, in the case where priority is given to the ease of formation of the melt, the first P₂S₅-containing powder raw material and the second P₂S₅-containing powder raw material may be powder raw materials having different compositions.

A configuration of the second P₂S₅-containing powder raw material is the same as the configuration of the first P₂S₅-containing powder raw material, and the preferred aspect is also the same.

The additional charging of the second P₂S₅ -containing powder raw material 12 to the melt 11 obtained in the step S1 may be continuously or intermittent. Continuous additional charging is preferred from the viewpoint of instantaneously melting the additionally charged second P₂S₅-containing powder raw material 12, continuously synthesizing melts one after another, proceeding to the subsequent cooling and solidification step, and efficiently producing a large number of sulfide solid electrolyte in a short time.

In the case of additionally charging the second P₂S₅-containing powder raw material 12 continuously to the melt 11, it is preferable to supply the second P₂S₅-containing powder raw material 12 in a metered amount. The method for the above metered amount supply is not particularly limited, and examples thereof include methods using a screw feeder, a table feeder, and gas flow conveyance.

A charging rate of the second P₂S₅-containing powder raw material 12 to be additionally charged to the melt 11 is preferably 0.01 g/sec to 250 g/sec, more preferably 0.025 g/sec to 200 g/sec, and still more preferably 0.05 g/sec to 150 g/sec. Here, the charging rate is preferably 0.01 g/sec or more, more preferably 0.025 g/sec or more, and still more preferably 0.05 g/sec or more, from the viewpoint of efficiently producing the sulfide solid electrolyte. The charging rate is preferably 250 g/sec or less, more preferably 200 g/sec or less, and still more preferably 150 g/sec or less, from the viewpoint of sufficiently mixing the melt 11 and the additionally charged second P₂S₅-containing powder raw material 12.

The inert gas 13 flowing in together with the second P₂S₅-containing powder raw material 12 is not particularly limited as long as it does not react with the second P₂S₅-containing powder raw material 12, and examples thereof include a nitrogen (N₂) gas, an argon (Ar) gas, and a helium (He) gas. These inert gas 13 may be used alone or in combination of two or more kinds thereof.

When the additional charging of the second P₂S₅-containing powder raw material 12 and the inflow of the inert gas 13 are performed, the additional charging and the inflow are preferably performed in a sulfur-containing gas atmosphere from the viewpoint of replenishing sulfur corresponding to a decrease due to volatilization during the heating and melting and preventing a composition change due to the volatilization.

The sulfur-containing gas atmosphere can be implemented by a method of generating a sulfur element-containing gas in the furnace or a method of feeding a sulfur element-containing gas into the furnace. These methods may be used alone or in combination in plural.

Examples of the sulfur element-containing gas include a gas containing a compound containing the sulfur element or elemental sulfur, such as a sulfur gas, a hydrogen sulfide gas, and a carbon disulfide gas.

In the case where the sulfur element-containing gas is generated in the furnace, for example, a sulfur source is heated in the furnace to generate the sulfur element-containing gas. The sulfur source may be supplied to the melt in the furnace, or may be supplied to the first P₂S₅-containing powder raw material or the second P₂S₅-containing powder raw material. In the case of supplying the sulfur source to the first or second P₂S₅-containing powder raw material, the sulfur source is also heated when heating and melting the first or second P₂S₅-containing powder raw material, and the sulfur element-containing gas is generated, whereby the sulfur-containing gas atmosphere can be obtained.

Examples of the sulfur source include elemental sulfur, organic sulfur compounds such as hydrogen sulfide and carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and a rubber subjected to a sulfur vulcanization treatment. Among these, a sulfur powder is preferred.

In the case of feeding the sulfur element-containing gas into the furnace, for example, sulfur may be heated at 200°C to 450°C to generate a sulfur vapor, and an inert gas such as a N₂ gas, an argon gas, or a helium gas may be used as a carrier gas to transport the sulfur vapor into the furnace.

In the step S2, it is preferable that the temperature of the melt melted by additionally charging the second P₂S₅-containing powder raw material is about the same as that of the melt in the step S1.

In the step S2, the temperature is adjusted by a heating unit (not shown) provided in the furnace 1 so as to be about the same temperature as above. In the step S2, since it is sufficient to compensate for thermal energy corresponding to the temperature lowered by the additional charging of the second P₂S₅-containing powder raw material, the temperature of the melt may be maintained at the same level by maintaining the temperature in the apparatus by a heater or the like instead of the heating unit.

The pressure during the melting in the step S2 is not particularly limited similar to the pressure during the heating and melting in the step S1. For example, a normal pressure or a slight pressure is preferred, and a normal pressure is more preferred.

From the viewpoint of preventing side reactions with water vapor, oxygen, and the like during the melting in the step S2, the dew point in the furnace during the melting is preferably -20°C or lower. A lower limit is not particularly limited, and is generally -80°C or higher. An oxygen concentration in the furnace is preferably 1,000 ppm by volume or less.

### <Step S3: Step of Cooling and Solidifying Melt>

The production method according to the present embodiment preferably includes a step of cooling and solidifying the melt obtained in the step S2. By cooling the melt, a solid sulfide solid electrolyte is obtained.

In the step S3, the melt obtained in the step S2 is discharged through a discharge port 14 provided in the furnace 1 at any timing, and the production method proceeds to a step of cooling and solidifying the melt.

The cooling of the melt can be performed by a known method and is not particularly limited. For example, from the viewpoint of increasing a cooling rate, cooling using a twin roller, which is generally said to have the highest rapid cooling rate, is preferred.

The cooling rate is preferably 0.01°C/sec or more, more preferably 0.05°C/sec or more, and still more preferably 0.1°C/sec or more, from the viewpoint of maintaining the composition of the melt obtained in the step S2. The upper limit value of the cooling rate is not particularly limited, and the cooling rate of the twin roller is, for example, 1,000,000°C/sec or less.

When it is desired to obtain an amorphous sulfide solid electrolyte, it is preferable to perform rapid cooling at a higher cooling rate. The cooling rate during the rapid cooling is preferably 10°C/sec or more, more preferably 100°C/sec or more, still more preferably 500°C/sec or more, and particularly preferably 700°C/sec or more. The upper limit value of the cooling rate during the rapid cooling is not particularly limited, and the cooling rate of the twin roller is, for example, 1,000,000°C/sec or less.

On the other hand, a sulfide solid electrolyte having a crystal phase may be obtained by slow cooling in the cooling and solidification step. The sulfide solid electrolyte may have a crystal phase and an amorphous.

A cooling rate in the case of the slow cooling is preferably 0.01°C/sec to 500°C/sec, and more preferably 0.05°C/sec to 450°C/sec. The cooling rate may be 0.01°C/sec to 10°C/sec or 0.05°C/sec to 5°C/sec.

Here, the cooling rate is preferably 0.01°C/sec or more, more preferably 0.05°C/sec or more, and is preferably 500°C/sec or less, more preferably 450°C/sec or less. The cooling rate may be 10°C/sec or less or 5°C/sec or less. The cooling rate may be appropriately adjusted according to crystallization conditions.

A crystal of the sulfide solid electrolyte is preferably an ion conductive crystal. Specifically, in the case where a carrier is a lithium ion, the ion conductive crystal is preferably a crystal having a lithium ion conductivity of more than 10⁻⁴ S/cm, and the lithium ion conductivity is more preferably more than 10⁻³ S/cm.

When it is desired to obtain the sulfide solid electrolyte having a crystal phase, it is preferable to contain a compound to be a crystal nucleus in the melt obtained in the step S2 in order to facilitate precipitation of crystals.

The method of incorporating the compound serving as the crystal nucleus into the melt is not particularly limited, and examples thereof include a method of adding the compound to be a crystal nucleus to the first P₂S₅-containing powder raw material in the step S1 or the second P₂S₅-containing powder raw material additionally charged in the step S2, and a method of directly adding the compound to be a crystal nucleus to the melt during the heating and melting.

Examples of the compound to be a crystal nucleus include oxides, oxynitrides, nitrides, carbides, other chalcogen compounds, and halides. The compound to be a crystal nucleus is preferably a compound having a certain degree of compatibility with the melt. A compound completely incompatible with the melt cannot serve as a crystal nucleus.

An addition amount of the compound to be a crystal nucleus with respect to the melt is preferably 0.01 mass% to 20 mass%, more preferably 0.1 mass% to 20 mass%, and still more preferably 1 mass% to 10 mass%. Here, the addition amount is preferably 0.01 mass% or more, more preferably 0.1 mass% or more, and still more preferably 1 mass% or more, from the viewpoint of suitably forming a crystal phase in the obtained sulfide solid electrolyte. The addition amount is preferably 20 mass% or less, and more preferably 10 mass% or less, from the viewpoint of preventing a decrease in lithium ion conductivity.

When it is desired to obtain a sulfide solid electrolyte having a large amount of an amorphous phase, the compound to be a crystal nucleus is not added to the melt, or even when the compound is added, the addition amount is preferably 1 mass% or less, and more preferably 0.1 mass% or less. The addition amount may be 0.01 mass% or less.

The cooling and solidification is preferably performed under a normal pressure. The normal pressure means that the pressure is not controlled during the cooling. Specifically, the pressure is about 0.8 atm to 1.2 atm.

The solid sulfide solid electrolyte obtained in the step S3 may be heated again for a heat treatment. In the case where the sulfide solid electrolyte is amorphous or has an amorphous phase, the heat treatment may be particularly performed.

The lithium ion conductivity may be increased by rearranging ions in the crystal structure by the heat treatment.

The heat treatment refers to at least one of a heat treatment for crystallizing the obtained solid and a heat treatment for rearranging the ions in the crystal structure. That is, the heat treatment also includes a crystallization treatment by heating the amorphous sulfide solid electrolyte or the sulfide solid electrolyte having an amorphous phase.

In the production method according to the present embodiment, the step S2 and the step S3 are preferably performed as a continuous process. That is, as the step S2, the second P₂S₅-containing powder raw material is additionally charged continuously or intermittently to the melt obtained in the step S1, and the process is shifted to a step in which, as the step S3, the melt produced over time by melting is continuously discharged and the melt is cooled and solidified. In this manner, it is preferable to continuously produce the sulfide solid electrolyte.

By continuously producing the sulfide solid electrolyte, a series of steps of charging the second P₂S₅-containing powder raw material, discharging and cooling the melt are continuously performed, and a large number of sulfide solid electrolytes can be produced more efficiently in a short time.

Specifically, it is preferable to continuously perform a series of steps including the step S1, the step S2, and the step S3.

### <Sulfide Solid Electrolyte>

Examples of a sulfide solid electrolyte obtained by the production method according to the present embodiment include a sulfide solid electrolyte containing a lithium element in the case of being used in a lithium ion secondary battery. Examples of the sulfide solid electrolyte include a sulfide solid electrolyte having an LGPS crystal structure such as Li₁₀GeP₂S₁₂, a sulfide solid electrolyte having an argyrodite crystal structure such as Li₆PS₅Cl, Li_{5.4}PS_{4.4}Cl_{1.6}, and Li_{5.4}PS_{4.4}Cl_{0.8}Br_{0.8}, a Li-P-S-Ha-based (Ha represents at least one element selected from halogen elements) crystallized glass, and an LPS crystallized glass such as Li₇P₃S₁₁.

Depending on the purpose, the sulfide solid electrolyte may be an amorphous sulfide solid electrolyte, a sulfide solid electrolyte having a specific crystal structure, or a sulfide solid electrolyte having a crystal phase and an amorphous phase. The crystal phase is more preferably an argyrodite crystal phase from the viewpoint of the lithium ion conductivity.

From the viewpoint of the lithium ion conductivity, a sulfide solid electrolyte containing elements of Li, P, S, and Ha is preferred, and a sulfide solid electrolyte having a crystal phase is more preferred. The halogen element is preferably derived from one or more selected from the group consisting of lithium chloride, lithium bromide, and lithium iodide as the raw materials.

The lithium ion conductivity of the sulfide solid electrolyte is preferably 1.0 × 10⁻⁴ S/cm or more, more preferably 5.0 × 10⁻⁴ S/cm or more, still more preferably 1.0 × 10⁻³ S/cm or more, and particularly preferably 5.0 × 10⁻³ S/cm or more, from the viewpoint of battery properties when used in a lithium ion secondary battery.

The lithium ion conductivity in the present description is a value measured using an AC impedance measurement apparatus (for example, potentiostat/galvanostat VSP, manufactured by Bio-Logic Sciences Instruments) under the following conditions: measurement frequency: 100 Hz to 1 MHz, measurement voltage: 100 mV, measurement temperature: 25°C.

The obtained sulfide solid electrolyte can be identified by analyzing the crystal structure by X-ray diffraction (XRD) measurement, and analyzing the elemental composition using various methods such as ICP emission spectrometry, atomic absorption spectrometry, and ion chromatography. For example, P and S can be measured by ICP emission spectrometry, Li can be measured by atomic absorption spectrometry, and Ha can be measured by ion chromatography.

The homogeneity of the composition of the sulfide solid electrolyte can be evaluated by Raman spectrum measurement. Specifically, a sample obtained from the obtained sulfide solid electrolyte is subjected to the Raman spectrum measurement at any two or more points. From the viewpoint of improving accuracy of the evaluation, the number of measurement points is preferably 8 or more, and more preferably 10 or more.

Preferred conditions for the Raman spectrum measurement when evaluating the homogeneity of the composition of a sulfide solid electrolyte include a spot diameter of 3 µm and the number of measurement points of 10, for example. By setting the spot diameter to 3 µm, an analysis region in the Raman spectrum measurement is a size suitable for evaluating the homogeneity of the composition of the sulfide solid electrolyte at a micro level.

It is believed that the smaller the variation in peak wavenumber (peak position) derived from the structure of the sulfide solid electrolyte is, such as PS₄³⁻ in each measurement result, the more homogeneous the composition of the sulfide solid electrolyte is. Alternatively, it is believed that the smaller the variation in full width at half maximum of the peaks derived from the structure of the sulfide solid electrolyte is, the more homogeneous the composition of the sulfide solid electrolyte is.

It is preferable to check peaks derived from a P-S bond as the peaks derived from the structure of the sulfide solid electrolyte, although it depends on the composition of the obtained sulfide solid electrolyte.

A position of the peak derived from the P-S bond varies depending on the composition system, but typically, the position is between 350 cm⁻¹ and 500 cm⁻¹. In the present description, a variation in the peak position and the variation in full width at half maximum of the peak refer to those checked for the most intense peak among the peaks derived from the P-S bond.

The variation in peak position can be evaluated as follows.

That is, in the case where a standard deviation of the peak positions for each measurement point obtained by the Raman spectrum measurement is determined and the variation in peak position is expressed as (peak position average value) ± (standard deviation), the standard deviation value is preferably within 2 cm⁻¹, more preferably within 1 cm⁻¹, and still more preferably within 0.5 cm⁻¹. Here, the peak position refers to a position of a peak top.

For example, when the sulfide solid electrolyte obtained by the production method according to the present embodiment is subjected to the Raman spectrum measurement with a spot diameter of 3 µm and 10 measurement points, the standard deviation of the peak positions of the peaks derived from the P-S bond in a range of 350 cm⁻¹ to 500 cm⁻¹ for each measurement point is preferably within 2 cm⁻¹, more preferably within 1 cm⁻¹, and still more preferably within 0.5 cm⁻¹.

The variation in full width at half maximum of the peaks can be evaluated as follows.

That is, the standard deviation of the full width at half maximum of the peaks for each measurement point obtained by the Raman spectrum measurement is calculated by determining the full width at half maximum of each peak and then calculating a standard deviation of the values. In the case where this is expressed as (average value of full width at half maximum of peaks) ± (standard deviation), the standard deviation value is preferably within 2 cm⁻¹, and more preferably within 1.5 cm⁻¹. The full width at half maximum of the peaks in the present description means a width at which a value at which the peak intensity is half of the peak derived from the P-S bond intersects the peak derived from the P-S bond when a Raman spectrum is drawn.

When the sulfide solid electrolyte obtained by the production method according to the present embodiment is subjected to the Raman spectrum measurement with a spot diameter of 3 µm and 10 measurement points, the standard deviation in full width at half maximum of the peaks derived from the P-S bond in a range of 350 cm⁻¹ to 500 cm⁻¹ for each measurement point is preferably within 2 cm⁻¹, and more preferably within 1.5 cm⁻¹.

The present invention is not limited to the above embodiment, and various modifications can be adopted within the scope of the present invention. For example, the present invention is not limited to the above embodiment, and may be modified and improved as appropriate. In addition, the material, shape, size, number, arrangement place, and the like of each component in the above embodiment are optional as long as the present invention can be achieved, and are not limited.

### EXAMPLES

Hereinafter, the present invention is specifically described with reference to Examples, but the present invention is not limited thereto. Examples 1 and 2 are Inventive Examples, and Example 3 is a Comparative Example.

### <<Test Example>>

### <Example 1>

In a glove box adjusted to a nitrogen atmosphere environment at a dew point of -50°C, raw material powders of Li₂S, P₂S₅, and LiCl were blended in order at a molar ratio of 1.9:0.5:1.6, and sufficiently stirred and mixed to obtain a mixture as a first P₂S₅-containing powder raw material. Into a carbon container in which the atmosphere had been replaced with a nitrogen atmosphere having a dew point of -50°C or lower, 300 g of the obtained mixture was charged.

The weighed mixture was placed into a sealed container, which was then charged into a hopper connected to a quantitative feeder (Micron Feeder, manufactured by Aishin Nano Technologies CO., LTD) without exposure to the atmosphere. The dew point in the hopper was also adjusted to -50°C or lower.

The quantitative feeder and a furnace were connected by a pipe serving as a flow path, nitrogen was flowed into the pipe at 10 SLM, that is, at a flow velocity of 0.45 m/sec, and 150 g of the mixture was charged into the carbon container in which the atmosphere had been replaced with a nitrogen atmosphere having a dew point of -50°C or lower.

Next, the charging of the mixture was stopped, and the carbon container was heated to 300°C at a heating rate of 5°C/min and held for 0.5 hours, and then heated to 700°C at a heating rate of 5°C/min and held, while flowing a nitrogen gas. Accordingly, the mixture, that is, the first P₂S₅-containing powder raw material was heated and melted to form a melt, and a melt surface was formed in the furnace (step S1).

Next, in a glove box adjusted to a nitrogen atmosphere environment at a dew point of -50°C, raw materials were blended in the same molar ratio as the above mixture, and sufficiently stirred and mixed to obtain a mixture as a second P₂S₅-containing powder raw material. The mixture was placed into a sealed container, which was then charged into a hopper connected to a quantitative feeder (Micron Feeder, manufactured by Aishin Nano Technologies CO., LTD) without exposure to the atmosphere. The dew point in the hopper was also adjusted to -50°C or lower. A nitrogen gas was flowed in at 10 SLM, that is, at a flow velocity of 0.45 m/sec, and at the same time, the mixture, that is, the second P₂S₅-containing powder raw material was continuously and additionally charged at a rate of 0.1 g/sec and melted.

At the same time as the additional charging of the second P₂S₅-containing powder raw material and the inflow of the nitrogen gas, sulfur was heated at 350°C to feed a sulfur vapor into the furnace, thereby providing a sulfur-containing gas atmosphere (step S2).

The melt was flowed out through the discharge port attached to the carbon container and cooled rapidly, to obtain a solid sulfide solid electrolyte having an amorphous phase and an argyrodite crystal phase (step S3).

The step S3 was also performed while continuing the additional charging of the second P₂S₅-containing powder raw material in the step S2 for 2 hours, but the sulfide solid electrolyte could be continuously and stably produced without causing clogging.

Thereafter, the temperature in the furnace was lowered while a nitrogen gas was flowed in, and the vicinity of the supply port and the pipe into and through which the second P₂S₅-containing powder raw material was charged were observed using an endoscope.

As a result, a deposit considered to be the second P₂S₅-containing powder raw material was observed on a wall surface of the pipe or in the vicinity the supply port, but the deposition amount was small, and it was seen aggregation of volatile components contained in the melt was suitably prevented.

### <Example 2>

A sulfide solid electrolyte was produced in the same manner as in Example 1 except that, in the step S2, a second pipe as a second flow path into which only a nitrogen gas was flowed was disposed around a first pipe as a first flow path through which the second P₂S₅-containing powder raw material was charged and into which the nitrogen gas was flowed.

The flow rate of the nitrogen gas in the second pipe was 1 SLM, and the flow rate of the nitrogen gas in the first pipe disposed around the second pipe was 9 SLM, that is, the flow velocity was 0.45 m/sec.

The step S3 was also performed while continuing the additional charging of the second P₂S₅-containing powder raw material in the step S2 for 2 hours, but the sulfide solid electrolyte could be continuously and stably produced without causing clogging.

Thereafter, the temperature in the furnace was lowered while a nitrogen gas was flowed in, and the vicinity of the supply port and the pipe into and through which the second P₂S₅-containing powder raw material was charged were observed using an endoscope.

As a result, almost no deposit considered to be the second P₂S₅-containing powder raw material was observed on the wall surface of the pipe or in the vicinity the supply port, and almost no deposit was deposited, and thus it was seen that aggregation of volatile components contained in the melt was very suitably prevented. As a result, it is found that a sulfide solid electrolyte can be stably produced.

### <Example 3>

A sulfide solid electrolyte was produced in the same manner as in Example 1 except that a nitrogen gas was not allowed to flow in during additional charging of the second P₂S₅-containing powder raw material in the step S2.

The additional charging of the second P₂S₅-containing powder raw material was continued in the step S2 to try to continuously obtain the sulfide solid electrolyte, but the additional charging of the second P₂S₅-containing powder raw material was stopped because the second P₂S₅-containing powder raw material could not be charged into the furnace due to the occurrence of clogging in the middle.

The temperature in the furnace was lowered, and the vicinity of the supply port and the pipe into and through which the second P₂S₅-containing powder raw material was charged were observed using an endoscope.

As a result, deposits adhered to the wall surface of the pipe or in the vicinity the supply port, and as described above, clogging of the supply port into which the second P₂S₅-containing powder raw material was charged was seen.

Although the present invention has been described in detail with reference to the specific embodiment, it is apparent to those skilled in the art that various changes and modifications can be made without departing from the spirit and scope of the present invention. The present application is based on a Japanese Patent Application (Japanese Patent Application No. 2023-119360) filed on July 21, 2023, the content of which is incorporated herein by reference.

### REFERENCE SIGNS LIST

1 furnace
2 supply port
10 apparatus
11 melt
12 second P₂S₅-containing powder raw material
13 inert gas
14 discharge port
15 exhaust port
16 first flow path
17 second flow path

## Claims

1. A method for producing a sulfide solid electrolyte, which is a method for continuously producing a sulfide solid electrolyte, the method comprising:
heating and melting a first P₂S₅-containing powder raw material to form a melt; and
additionally charging a second P₂S₅-containing powder raw material to the melt and performing melting,
wherein an inert gas is flowed into the melt when additionally charging the second P₂S₅-containing powder raw material thereto.

2. The method for producing a sulfide solid electrolyte according to claim 1, wherein a gas flow velocity when the inert gas is flowed is 0.05 m/sec or more.

3. The method for producing a sulfide solid electrolyte according to claim 1 or 2, wherein a temperature in the heating and melting is 600°C or higher.

4. The method for producing a sulfide solid electrolyte according to claim 1 or 2,
wherein the additional charging is performed through a first flow path through which the second P₂S₅-containing powder raw material is charged and a second flow path through which the inert gas flows in, and
the second flow path is disposed around the first flow path.

5. The method for producing a sulfide solid electrolyte according to claim 4, wherein a flow rate of the inert gas passing through the second flow path is larger than a flow rate of the inert gas passing through the first flow path.

6. The method for producing a sulfide solid electrolyte according to claim 1 or 2, wherein the inert gas has a dew point of lower than -50°C.
